# EUROPEAN PATENT APPLICATION

(11) **EP 0 891 822 A1**
(43) Date of publication of application: **20.01.1999**
(21) Application number: 98305487.5
(22) Date of filing: 10.07.1998
(51) Int. Cl.: B21D 5/00, B21D 11/22, B23D 1/26

(54) **Apparatus and method for cutting a v-shaped groove in a sheet of material**

(30) Priority: 15.07.1997 JP 190079/97
(71) Applicant: Nicotec Co., Ltd., Tokyo 158 (JP)
(72) Inventor: Murakoshi, Takeharu, Isehara-shi, Kanagawa-ken (JP); Kasai, Shigeo, Sagamihara-shi, Kanagawa-ken (JP); Hoshino, Hiroshi, Atsugi-shi, Kanagawa-ken (JP)
(74) Representative: Abbie, Andrew Kenneth

(57) **Abstract**

This invention provides V-shape groove cutting method, V-shape groove cutting unit and V-shape groove cutting machine capable of cutting the V-shape groove easily at low cost. By bringing an upper table (7) and a lower table (9) relatively closer, a work is pinched in cooperation between a first plate pressing tool (FP) and a second pressing tool (15). When a carriage moving unit (21) moves a carriage (19) along a guiding member (15), a V-shape groove cutting blade (17) for V-shape groove cutting mounted on the carriage (19) cuts a V-shape groove in the work. Therefore, a straight V-shape groove can be cut easily.

## Description

This invention relates to a groove cutting method, unit and machine, and more particularly, but not exclusively, to such a method, unit and machine for V-shape groove cutting which, for example, is performed prior to bending work of SPCC (a kind of sheet metal of steel by cold rolling) or stainless steel sheet.

In a case when steel sheet is subjected to bending work, if a work, or workpiece, W is bent without any previous working on the work, the radius of a corner is enlarged. Thus, in case the bending radius is desired to be small, bending work is carried out near an end of material, or in case a pressure required for bending work is desired to be reduced or the like, a V-shape groove VG is generally provided at a scheduled bending position of the work before the bending work is carried out. In such V-shape groove cutting, a special-purpose V-shape cutting machine or a general-purpose planer is often used.

However, there is a problem in which the special-purpose V-shape groove cutting machine cannot be used for other purposes than V-shape groove cutting because it is very expensive and designed for the special purpose. Further, although the planar is a general-purpose machine, it is very expensive and bulky so that it needs a wide installation place.

Although such a hand tool as a sander is available as a simple V-shape groove cutting machine, this kind of machine is not capable of processing a straight line or cutting a clear V-shape groove.

### SUMMARY OF THE INVENTION

The present invention has been achieved with such points in view and it is therefore an object of the invention to provide a V-shape groove cutting method, V-shape groove cutting unit and V-shape cutting machine capable of cutting V-shape groove easily at low cost with a space-saved size.

To achieve the above object, according to a first aspect of the present invention, there is provided a V-shape groove cutting method comprising the steps of: pressing a work to a second plate pressing tool mounted on one of a upper table and lower table which approach and leave relative to each other by means of a first plate pressing tool mounted on the other of the upper table and the lower table; and cutting a V-shape groove in the work by moving a V-shape groove cutting blade along the first or second plate pressing tool.

By bringing the upper table and lower table relatively closer, the work is pinched in cooperation between the first plate pressing tool and second plate pressing tool. Then, the V-shape groove cutting blade for the V-shape groove cutting is moved along the first or second plate pressing tool so as to cut the V-shape groove in the work. Therefore, it is facilitated to cut the straight V-shape groove in the work.

According to a second aspect of the invention, there is provided a V-shape groove cutting method according to the first aspect wherein the upper table and lower table are upper table and lower table of a press brake.

Therefore, the plate pressing tool is mounted on one of the upper table and lower table and the guiding member is mounted on the other of the upper table and lower table. In this connection, a V-shape groove cutting machine can be produced with a reduced cost by using a press brake.

According to a third aspect of the invention, there is provided a V-shape groove cutting unit comprising: a plate pressing tool for pressing a work to be cut with a V-shape groove in the work; a carriage movably supported along the plate pressing tool and provided with a V-shape groove cutting blade for cutting the V-shape groove; and a carriage moving unit provided on the plate pressing tool for moving the carriage along the plate pressing tool.

Therefore, by bringing the upper table and lower table relatively closer, the work is pinched in cooperation between the plate pressing tool and guiding member. By moving the carriage along the guiding member by means of the carriage moving unit, the V-shape groove is cut in the work by the V-shape groove cutting blade for V-shape groove cutting, fit to the carriage.

According to a fourth aspect of the invention, there is provided a V-shape groove cutting unit according to the third aspect wherein the plate pressing tool has front and rear supporting portions and the carriage travels between the front and rear supporting portions in a length direction thereof.

Thus, because the carriage moves between the front and rear supporting portions provided on the plate pressing tool, the work is securely held during the V-shape groove cutting operation, so that an appropriate V-shape groove can be cut in the work.

According to a fifth aspect of the invention, there is provided a V-shape groove cutting unit according to the third aspect wherein the carriage moving unit comprises a chain attached to the carriage and a chain moving mechanism for moving the chain.

Thus, when the chain is moved by the chain moving mechanism, the carriage attached to the chain is moved so that the V-shape groove cutting blade cuts a V-shape groove in the work.

According to a sixth aspect of the invention, there is provided a V-shape groove cutting unit according to the third aspect wherein the V-shape groove cutting blade is mounted on the carriage such that: it protrudes therefrom toward the work; and a height of the blade increases gradually from a front side thereof to a rear side in a cutting direction.

Therefore, because the height of the tip of the V-shape groove cutting blade increases gradually with a progress of the carriage, the V-shape groove to be cut in the work becomes deeper and finally a V-shape groove of a desired depth is cut.

According to a seventh aspect of the invention, there is provided a V-shape groove cutting machine comprising: a first plate pressing tool for pressing a work mounted on one of a upper table and lower table which approach and leave relative to each other; a second plate pressing tool provided removably along the other of the upper table or lower table for pinching the work in cooperation with the first plate pressing tool; a carriage movably supported along the second plate pressing tool and provided with a V-shape groove cutting blade for cutting a V-shape groove; and a carriage moving unit for moving the carriage along a guiding member.

Thus, by bringing the upper table and lower table relatively closer, the work is pinched in cooperation between the first plate pressing tool and second plate pressing tool. By moving the carriage along the guiding member by means of the carriage moving unit, the V-shape groove cutting blade mounted on the carriage cuts a V-shape groove in the work.

According to an eighth aspect of the invention, there is provided a V-shape groove cutting machine according to the seventh aspect wherein the second plate pressing tool has front and rear supporting portions and the carriage travels between the front and rear supporting portions in a length direction thereof.

Therefore, because the carriage moves between the front and rear supporting portions provided on the second plate pressing tool, the work is securely held by the first plate pressing tool during the V-shape groove cutting operation.

According to a ninth aspect of the invention, there is provided a V-shape groove cutting machine according to the seventh aspect wherein the upper table and lower table are upper table and lower table of a press brake.

Therefore, the supporting member is installed on one of the upper table or lower table of the existing press brake and the guiding member is installed on the other thereof.

According to a tenth aspect of the invention, there is provided a V-shape groove cutting machine according to the seventh aspect wherein the carriage moving unit comprises a chain attached to the carriage and a chain moving mechanism for moving the chain.

Therefore, when the chain is moved by the chain moving mechanism, the carriage attached to the chain is moved so that the V-shape groove cutting blade cuts a V-shape groove in the work.

According to an eleventh aspect of the invention, there is provided a V-shape groove cutting machine according to the seventh aspect wherein the V-shape groove cutting blade is mounted on the carriage such that: it protrudes therefrom toward the work; and a height of the blade increases gradually from a front side thereof to a rear side in a cutting direction.

Therefore, because the height of the tip of the V-shape groove cutting blade increases gradually with a progress of the carriage, the V-shape groove to be cut in the work becomes deeper and finally a V-shape groove of a desired depth is cut.

### BRIEF DESCRIPTION OF THE ACCOMPANYING DRAWINGS

The above and further objects and novel features of the present invention will more fully appear from the following detailed description when the same is read in conjunction with the accompanying drawings, in which:
FIG. 1 is a front view showing a V-shape groove cutting machine according to the present invention;
FIG. 2 is a side view of a chain winding apparatus as viewed in the direction of II of FIG. 1;
FIG. 3 is a side view of a V-shape groove cutting unit;
FIG. 4 is an enlarged view of a carriage;
FIG. 5 is an enlarged view of an installation portion for the carriage and chain;
FIG. 6 is a sectional view taken along the line VI-VI of FIG. 4;
FIG. 7 is a sectional view taken along the line VII-VII of FIG. 4;
FIG. 8 is a sectional view taken along the line VIII-VIII of FIG. 4;
FIG. 9 is a diagram showing another embodiment of a chain as a carriage moving unit;
FIG. 10 is a perspective view showing a bent product not subjected to V-shape groove cutting;
FIG. 11 is a perspective view showing a bent product after the V-shape groove cutting;
FIG. 12 is a perspective view showing a product after the V-shape groove cutting.

### DETAILED DESCRIPTION OF THE PREFERRED EMBODIMENTS

There will be detailed below the preferred embodiments of the present invention with reference to the accompanying drawings. Like members are designated by like reference characters.

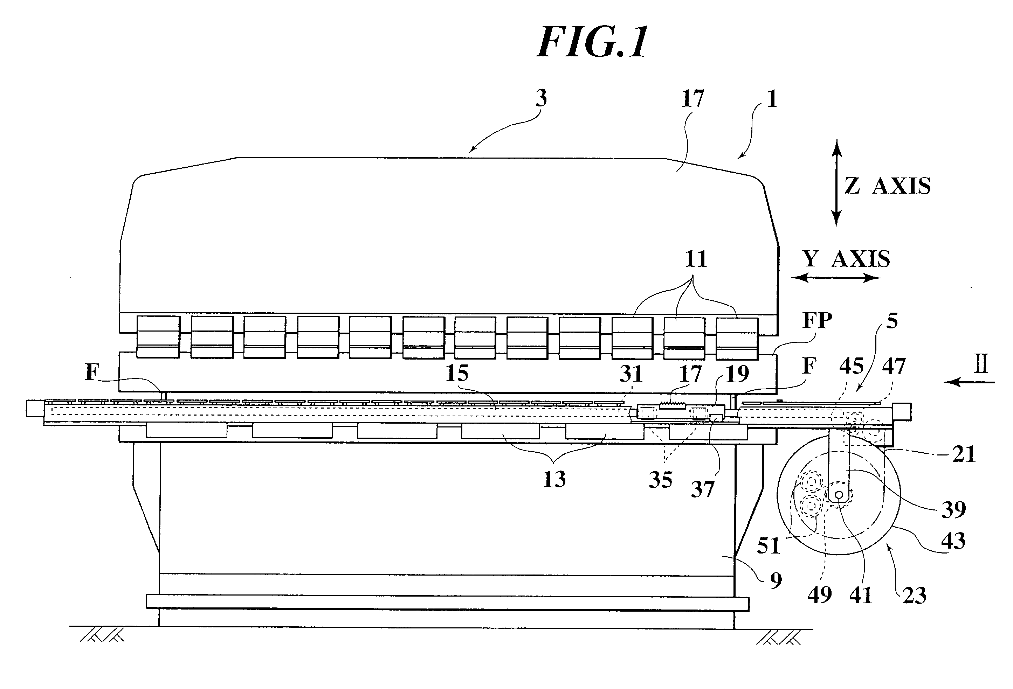

FIG. 1 shows an entire view of a V-shape groove cutting machine 1 according to the present invention. This V-shape groove cutting machine 1 is formed by installing a V-shape groove cutting unit 5 to a general-purpose press brake 3 which has been conventionally used.

Because the press brake 3 has been well known, a detailed description thereof is omitted and its outline will be described.

Referring to FIG. 1, the press brake 3 has frame F at the right and left (right and left as viewed relative to FIG. 1) which are erected and a upper table 7 long in the right/left direction is fixed at a front side (forward side relative to the surface of a drawing of FIG. 1) of a top portion of this frame F. A lower table 9 is installed at the front side of a bottom portion of the frame F such that it can be lifted up and down by a lifting apparatus such as a hydraulic cylinder (not shown).

A flat punch FP is removably mounted as a first plate pressing tool on a bottom end of the upper table 7 through a plurality of upper supporting units 11. Further, a V-shape groove cutting unit 5 is removably mounted on a upper end of the lower table 9 through mounting plates 13.

With the above described structure, if the lower table 9 is lifted up by the lifting apparatus, the work W positioned on the V-shape groove cutting unit is pressed by the flat punch FP as the first plate pressing tool so that it is held and fixed at a predetermined height.

Referring to FIGs. 1-8, the V-shape groove cutting unit 5 comprises a base rail 15 as a second plate pressing tool which is slightly longer than the width of the press brake 3, a carriage 19 having a V-shape groove cutting blade 17 and movable in the direction of Y-axis (right and left direction in FIG. 1) along the base rail 15, a chain which is a carriage moving device for moving this carriage 19, a chain winding apparatus 23 for winding this chain 21 and the like.

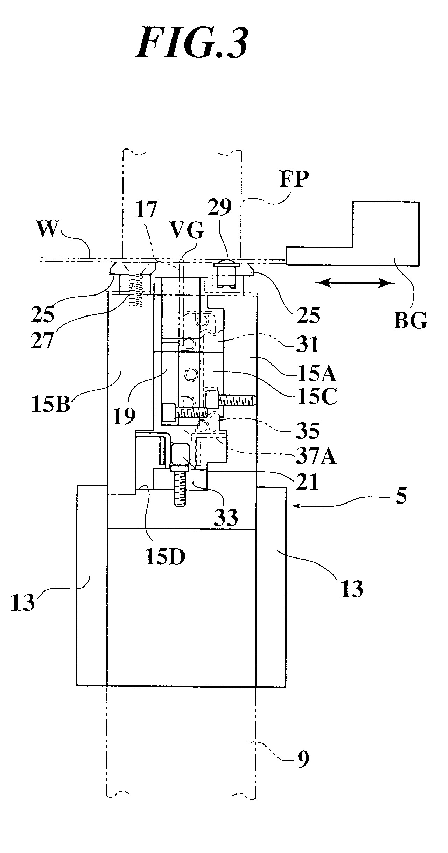

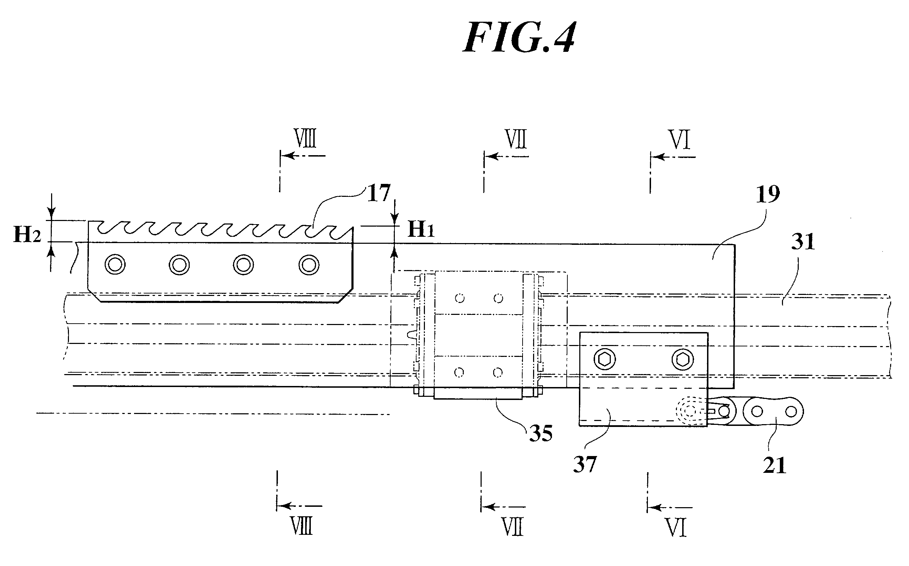

Referring to FIG. 3, the base rail 15 is mounted on the upper end of the lower table 9 through the mounting plates 13 instead of ordinary lower die. The base rail 15 has a front side block 15A and a rear side block 15B. A supporting member 25 is mounted on the upper end of the front side block 15A through a bolt 27. The front end height (right end in FIG. 4) H1 of the V-shape groove cutting blade 17 mounted on the carriage 19 is the same as or slightly larger than the height of the carriage 19. This height increases as it approaches the rear end (left end in FIG. 4) and the rear end height H2 is larger by the same amount as a depth of the V-shape groove VG to be cut than the supporting member 25. The V-shape groove cutting blade 17 does not have to be of multi-blades but may be of a single blade.

A bearing 29 for supporting the work W such that it is not pressed by the flat punch FP and movable is provided on the upper end of the rear side block 15B in such a condition that it can protrude slightly above the supporting member 25. This bearing 29 sank downward and supports the work W when the work W is pressed by the flat punch FP.

Backward of the base rail 15 (in the direction of the right of FIG. 3) is provided a back gauge BG for use in ordinary press brake 3 such that it is capable of moving in the forward-backward direction (right and left direction relative to FIG. 3) and being freely positioned. This back gauge fixes the work W at a predetermined position such that it comes into a firm contact therewith before V-shape groove cutting.

A linear guide rail serving as a chain traveling mechanism is provided on an inside wall 15C of the rear side block 15A in the direction of the Y-axis (in a direction perpendicular to the surface of a drawing of FIG. 3). A chain guide 33 for supporting a chain 21 so that it travels at a predetermined position is provided on a bottom wall 15D of the rear side block 15A.

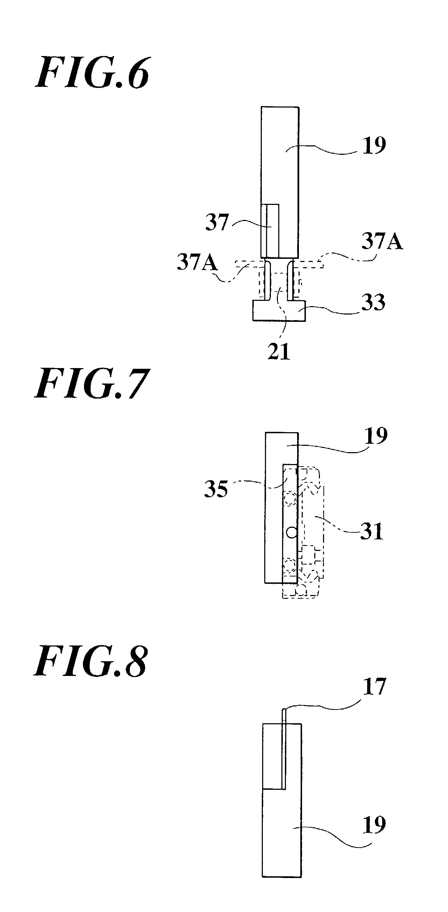

Referring to FIGs. 4 and 7, on the front side (right side of FIG. 3, back side of the surface of a drawing of FIG. 4 in the perpendicular direction) of the carriage 19 near each of the front and rear ends thereof is provided a slider 35 movable in the direction of the Y-axis along the linear guide rail 31. The V-shape groove cutting blade 17 is mounted near a center of the carriage 19 such that it protrudes upward. The other end (left end thereof in FIG. 1) of the chain 21 is connected to the front end of the carriage 19 through an interconnecting block 37. This interconnecting block 37 has a flange 37A each at its front and rear ends (right and left in FIG. 3) so as to prevent the chain 21 from deflecting in the back and forth direction when it travels.

With the above structure, when the carriage 19 is moved in the direction of the Y-axis (to the right of FIG. 4), the carriage 19 is supported movably along the linear guide rail 31 with an appropriate posture without changing its height. Thus, the V-shape groove cutting blade 17 is moved in the direction of the Y-axis with its predetermined height.

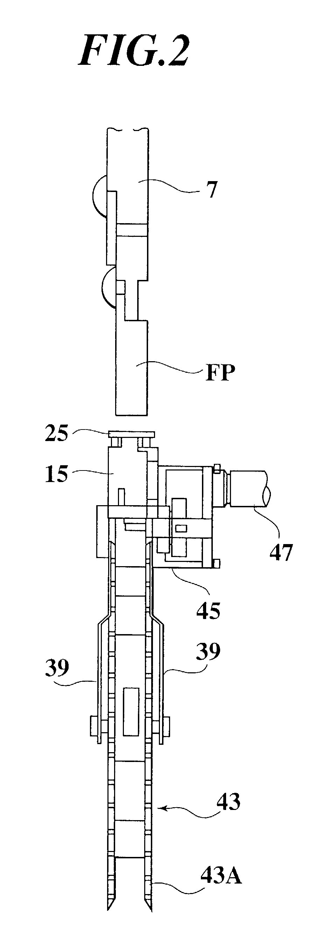

Referring to FIGs. 1 and 2, the aforementioned chain winding apparatus includes a chain reel 43 which is rotatably supported through a rotation shaft 41 by a supporting member 39 provided under the base rail 15 and a motor 47 for driving the chain reel 43 through a gear mechanism 45.

The gear mechanism 45 meshes with a gear portion 43A provided on an outside periphery portion of the chain reel 43, so that when the gear mechanism 45 is driven by a motor 47, and the chain reel 43 is rotated.

A winding spring coil 51 is provided on a central shaft 49 of the chain reel 43, so that when the motor 47 rotates the chain reel 43 clockwise as viewed in FIG. 1, a force for rotating the chain reel 43 counterclockwise is reserved. Therefore, when the chain reel 43 is not driven by the motor 47, the chain 21 can be pulled out easily.

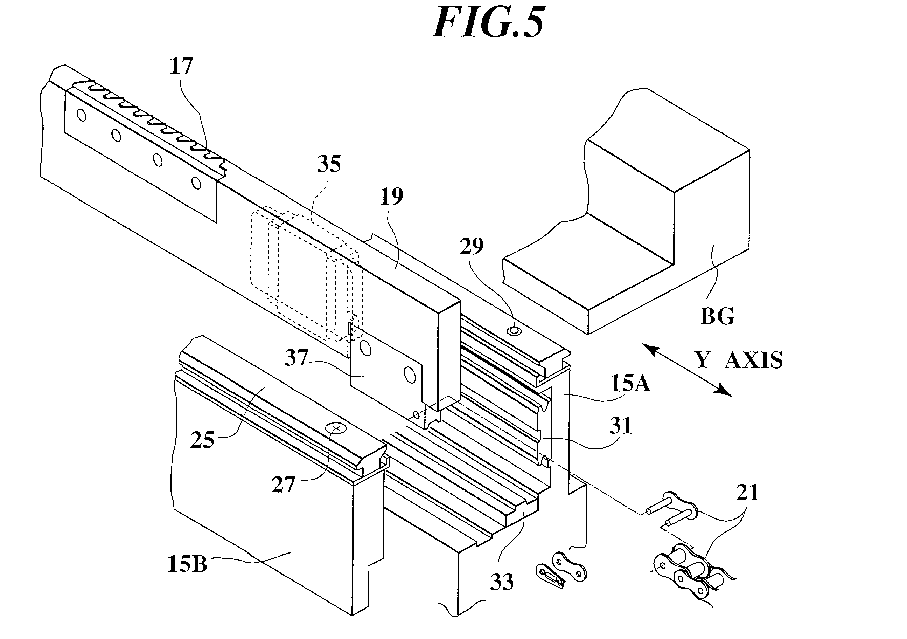

An end (right end thereof in FIG. 1) of the chain 21 is fixed to the carriage 19 (see FIGs. 4 and 5).

With the above described structure, if the chain reel 43 is rotated by the motor 47 through the gear mechanism 45 clockwise as viewed relative to FIG. 1, the chain 21 is wound up so that the carriage 19 is moved to the right of FIG. 1. If the motor 47 is stopped after the carriage 19 is moved to the right, an operator can move the carriage 19 easily with his hand.

Next, an operation for the V-shape groove cutting will be described.

First, a work W is positioned so that a predetermined position thereof is located at the position of the V-shape groove cutting blade 17 by bringing the work W in a firm contact with the back gauge BG and then moving the back gauge BG in the back and forth direction. Further, the carriage 19 on which the V-shape groove cutting blade 17 is mounted is moved to the left of FIG. 1 so that it is positioned on the left side of the work W.

Then, the work W is placed on the bearing 29 and pushed in until a front end thereof comes into a contact with the back gauge BG. If the positioning of the work is completed, the lower table 9 is lifted up so as to fix the work W by pinching it by the supporting member 25 of the V-shape groove cutting unit 5 and the flat punch FP.

If the motor 47 is driven to rotate the chain reel 43 winding up the chain 21, the carriage 19 is moved in the direction to the right in FIG. 1 along the linear guide rail 31 of the base reel 15. Because the height of the front end of the V-shape groove cutting blade 17 is lower than the supporting member 25, the V-shape groove cutting blade 17 comes under the work W easily. Then, with a progress of the carriage 19, the height of the V-shape groove cutting blade 17 increases gradually so that the V-shape groove is cut in the bottom surface of the work W and finally, the V-shape groove is cut up to a height of the rear end of the V-shape groove cutting blade 7.

If the carriage 19 is moved up to the right end of the work W so that the cutting of the V-shape groove VG is completed, the motor 47 is stopped and the lower table 9 is lifted down and then the work W is removed. Because the bearing 29 pushes up the work W, the operator is capable of removing the work W easily.

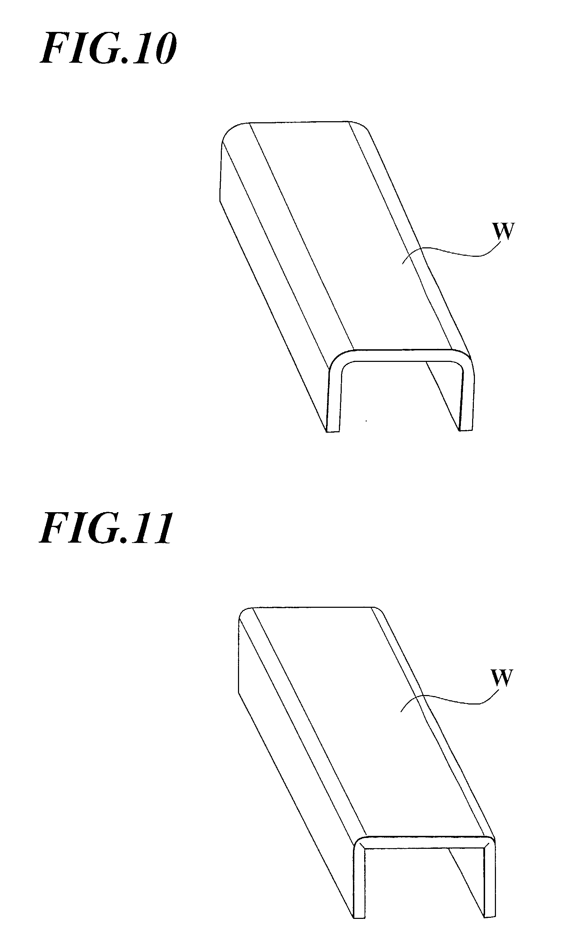

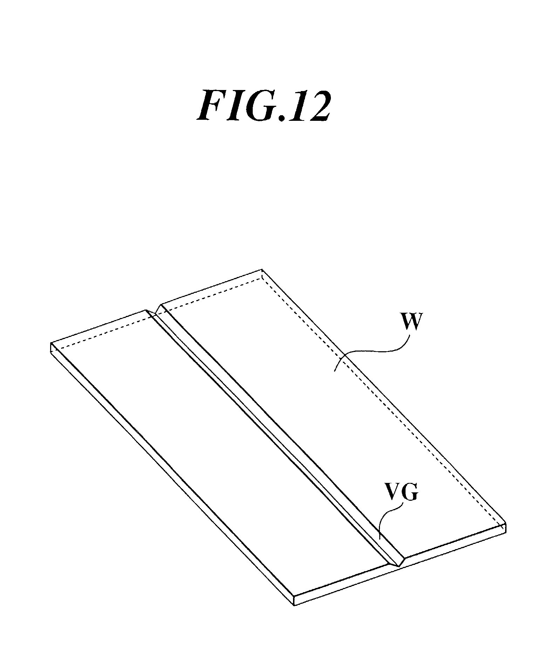

After the work W is cut with the V-shape groove VG by the V-shaped groove cutting blade 17 of the present invention according to the manner stated above as shown in FIG. 12, the work W is bent by the press brake 3, so that the bending radius is desired to be small as shown in FIG. 11. Thus, even if bending on the work W is carried out near an end of material, a pressure required for the bending is desired to be reduced.

On the contrary, in case the work W to be bent should be required with a relatively large radius, the work W is bent without any working of V-shape groove. Therefore, the radius of the corner portion of the bent plate is relatively large as shown in FIG. 10.

As evident from the above description, by installing the V-shape groove cutting unit 5 on the press brake 3 which has been conventionally used, it is possible to cut a straight V-shape groove VG easily. Therefore, the production cost of the apparatus can be reduced. Further, no additional installation space for the apparatus is needed thereby saving the installation space.

The present invention is not restricted to the above described embodiment, but can be carried out under other embodiments by making appropriate modifications. Although according to the embodiment described above, the existing press brake 3 is used and the V-shape groove cutting unit 5 is mounted on that press brake 3 so as to carry out the V-shape groove cutting, it is permissible to apply a processing machine having the same structure as the press brake 3 as the V-shape groove cutting machine 1.

Although the case of lifting up the lower table 9 has been explained about the above described embodiment, the same effect can be achieved by lifting down the upper table 7.

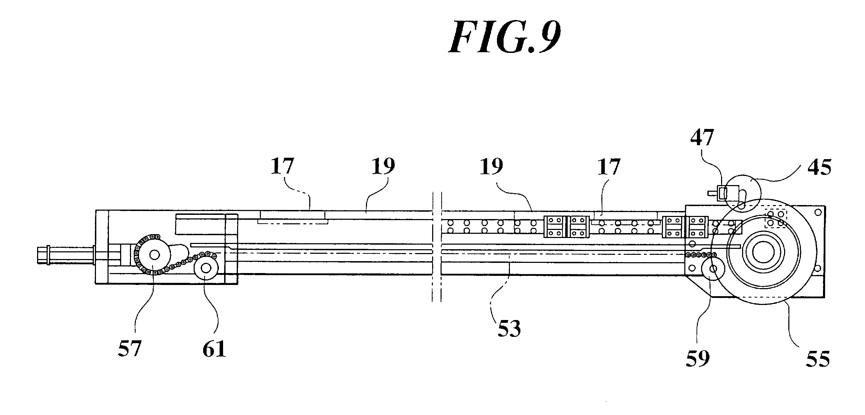

In the above embodiment, one end of the chain 21 for moving the carriage 19 having the V-shape groove cutting blade 17 is attached to the chain reel 43 and the other end thereof is attached to the carriage 19 so that the chain 21 is wound up by the chain reel 43. As shown in FIG. 9, it is permissible to apply a chain 53 in an endless form such that the chain 53 is wound around a driving sprocket of the right side and a driven sprocket 57 of the left side and supply the chain 53 with a constant tension with the idle sprockets 59, 61 so that the chain is freely movable. In this case, after the processing is completed, the carriage 19 can be automatically moved to the left side of FIG. 9 by rotating the motor 47 in a reverse direction. Further, by forming the shape of the V-shape groove cutting blade 17 so that the front and rear ends thereof are low and a central portion thereof is high, it is possible to carry out the V-shape groove cutting by reciprocating the chain 53. Further, although the example of using the chain 21 for moving the carriage 19 has been described here, it is permissible to use a wire, rack and pinion, belt, ball screw or the like instead of the chain 21.

While preferred embodiments of the present invention have been described using specific terms, such description is for illustrative purposes, and it is to be understood that changes and variations may be made without departing from the spirit or scope of the following claims.

## Claims

1. A V-shape groove cutting method comprising the steps of:
pressing a work to a second plate pressing tool mounted on one of a upper table and lower table which approach and leave relative to each other by a first plate pressing tool mounted on the other of said upper table and said lower table; and cutting a V-shape groove in the work by moving a V-shape groove cutting blade along said first or second plate pressing tool.

2. A V-shape groove cutting method according to claim 1 wherein said upper table and lower table are upper table and lower table of a press brake.

3. A V-shape groove cutting unit comprising:
a plate pressing tool for pressing a work to be cut with a V-shape groove in the work;
a carriage movably supported along said plate pressing tool and provided with a V-shape groove cutting blade for cutting the V-shape groove; and
a carriage moving unit provided on said plate pressing tool for moving said carriage along the plate pressing tool.

4. A V-shape groove cutting unit according to claim 3 wherein said plate pressing tool has front and rear supporting portions and said carriage travels between the front and rear supporting portions in a length direction thereof.

5. A V-shape groove cutting unit according to claim 3 or 4 wherein said carriage moving unit comprises a chain attached to the carriage and a chain moving mechanism for moving the chain.

6. A V-shape groove cutting unit according to claim 3, 4 or 5 wherein the V-shape groove cutting blade is mounted on the carriage such that: the V-shape groove cutting blade protrudes from the carriage toward the work; and a height of the blade increases gradually from a front side thereof to a rear side in a cutting direction.

7. A V-shape groove cutting machine comprising:
a first plate pressing tool for pressing a work mounted on one of a upper table and lower table which approach and leave relative to each other;
a second plate pressing tool provided removably along the other of said upper table or lower table for pinching the work in cooperation with said first plate pressing tool;
a carriage movably supported along the second plate pressing tool and provided with a V-shape groove cutting blade for cutting a V-shape groove; and
a carriage moving unit for moving said carriage along a guiding member.

8. A V-shape groove cutting machine according to claim 7 wherein said second plate pressing tool has front and rear supporting portions and said carriage travels between the front and rear supporting portions in a length direction thereof.

9. A V-shape groove cutting machine according to claim 7 or 8 wherein said upper table and lower table are upper table and lower table of a press brake.

10. A V-shape groove cutting machine according to claim 7, 8 or 9 wherein said carriage moving unit comprises a chain attached to the carriage and a chain moving mechanism for moving the chain.

11. A V-shape groove cutting machine according to claim 7, 8, 9 or 10 wherein the V-shape groove cutting blade is mounted on the carriage such that: the V-shape groove cutting blade protrudes from the carriage toward the work; and a height of the blade increases gradually from a front side thereof to a rear side in a cutting direction.

12. An apparatus for forming a groove in a sheet of sheet material, comprising a carriage means mounted for movement along an elongate guide and adapted to carry a groove forming device, and clamping means for clamping the sheet relative to the elongate guide such that movement therealong of the carriage means when carrying the groove forming device such that a groove forming portion thereof protrudes from the carriage means forms a groove in the sheet.
